Europäisches Patentamt

(19) European Patent Office

Office européen des brevets

(11) Publication number: **0 236 035 B1**

## EUROPEAN PATENT SPECIFICATION

(45) Date of publication of patent specification:
29.05.91 Bulletin 91/22

(51) Int. Cl.⁵: **G01S 3/78, G01S 7/48**

(21) Application number: 87301521.8

(22) Date of filing: 23.02.87

(54) **A laser threat warning system.**

(30) Priority: 24.02.86 GB 8604529

(43) Date of publication of application:
09.09.87 Bulletin 87/37

(45) Publication of the grant of the patent:
29.05.91 Bulletin 91/22

(84) Designated Contracting States:
DE FR IT NL

(56) References cited:
FR-A- 2 548 383
GB-A- 1 482 753
US-A- 3 745 566
LASER FOCUS, vol. 17, no. 4, April 1981, pages 72-80, Newton, Massachusetts, US; P.T. BALLARD: "Detecting laser illumination for military countermeasures"

(73) Proprietor: GEC-MARCONI LIMITED
The Grove, Warren Lane
Stanmore, Middlesex HA7 4LY (GB)

(72) Inventor: Coleman, Clive Ian
Marconi Defence Systems Ltd. The Grove
Warren Lane
Stanmore Middlesex, HA7 4LY (GB)

(74) Representative: Keppler, William Patrick
Central Patent Department Wembley Office
The General Electric Company, p.l.c. Hirst
Research Centre East Lane
Wembley Middlesex HA9 7PP (GB)

## Description

This invention relates to a laser threat warning system. In moern warfare a laser beam may itself constitute a weapon or may be the bearing and range-finding prelude to an attack by other weapons. In either event it is highly desirable that the presence of a laser beam and its source direction be detected as soon as possible so that a pre-emptive attack can be made if considered necessary or evasive action taken.

A number of laser threat warning receiver architectures and designs have been previously disclosed. However, because of the rapid decrease of intensity in the 'skirts' of a laser beam, even a highly sensitive receiver will not normally detect a beam which is targeted more than a very few metres from the receiver. Thus, a single receiver may be sufficient to protect a small vehicle such as a tank or helicopter, but a ship or large ground installation would require an inconveniently large number of receivers (with attendant unacceptable complexity and cost) to provide adequate threat warning capability.

An object of the present invention is thus to provide a system which can watch a relatively large sweep of territory, on land or sea, with relatively few, or even only one, receiver.

According to the present invention, a laser threat warning system comprises sensor means providing directional discrimination, the sensor means being directed at a local extended scattering body so as to receive laser radiation scattered from the body and comprising an array of sensor elements and an optical focussing system defining relatively near and far swathes of elemental areas of the body extending transversely between the sensor means and the source of a potential threat, the sensor means being simultaneously receptive to radiation scattered from elemental areas of the relatively near and far swathes, the directions of the near and far scattering elemental areas determined from a particular laser beam scattering providing an indication of the direction of the source of the laser beam.

According to another aspect of the invention, in a method of determining the direction of the source of a laser threat, sensor means providing directional discrimination are directed at a local extended scattering body, the sensor means comprising an aray of sensor elements and an optical focussing system defining relatively near and far swathes of elemental areas of the body extending transversely between the sensor means and the source of a potential threat, the particular elements of the swathes from which scattered radiation is received are identified, and the direction of the source is determined from the identity of the identified elements.

There may be more than two of the near and far swathes each of which is relatively nearer to or farther from the sensor means than each other swathe.

When the surface is substantially horizontal, the array of sensor elements comprise a respective linear array for each swathe, each linear array being curved in the focal plane of the optical system so that the swathes are of arcuate form around the sensor means.

The sensor means may be mounted on a ship and directed downwardly but having no view of the ship's structure. There may be included a plurality of the sensor means, each providing a plurality of swathes which together substantially surround the ship.

There may also be included means for dispensing a cloud of aerosol to constitute the scattering body.

There is preferably included processor means arranged to receive data from the sensor means and determine therefrom the direction of the source of the laser beam.

A laser threat warning system in accordance with the invention will now be described, by way of example, with reference to the accompanying drawings, of which :

Figure 1 is a perspective view of a ship carrying the system ;

Figure 2 is a plan view of the ship of Figure 1 showing swathes of scatter areas on the sea surface around the ship ;

Figure 3(a) shows a laser warning receiver mounted on the side of a mast of the ship and

Figure 3(b) shows, diagrammatically, the constitutents of the laser warning receiver.

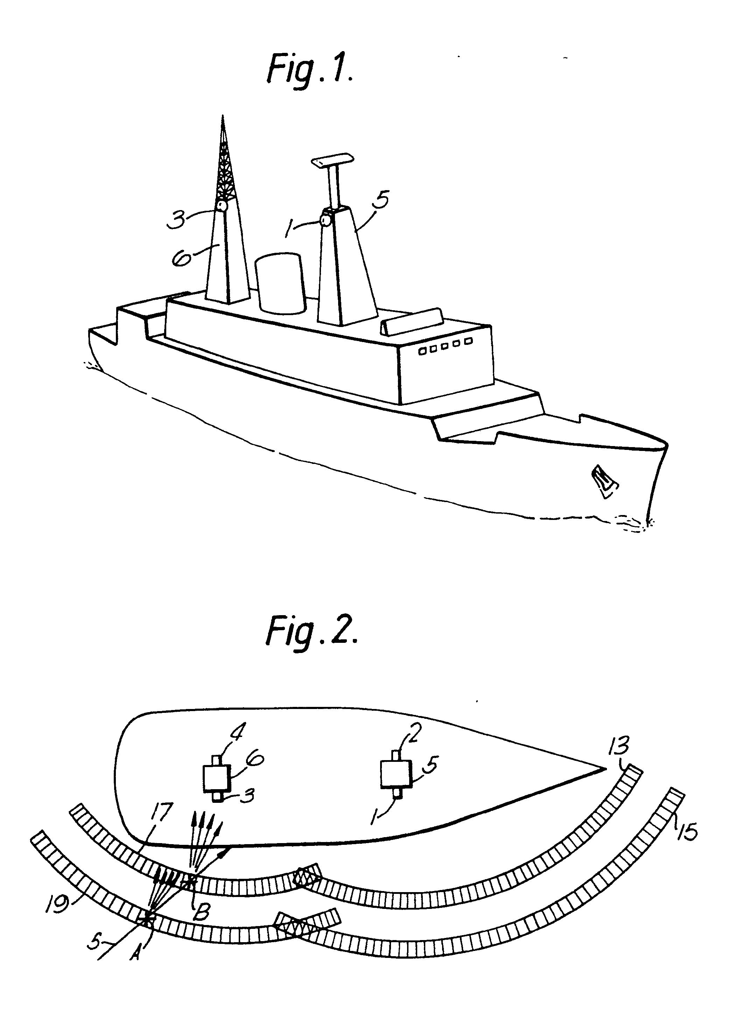

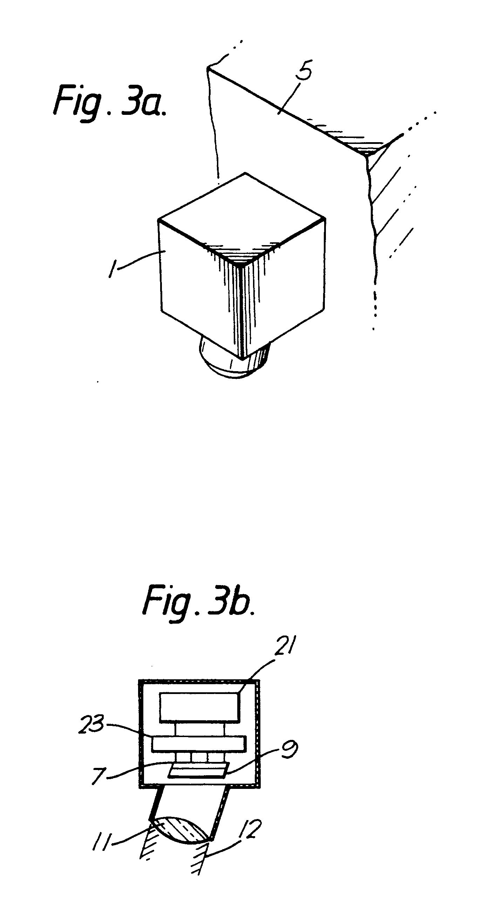

Referring to Figures 1 & 2 of the drawings, four laser warning receivers 1, 2, 3 and 4, each providing sensor means, are mounted high up on masts 5 and 6 of the ship and directed at the sea surface around the ship. If more convenient the laser warning receivers can be mounted on pylons attached to the masts. The receiver is directed downwardly as shown in Figure 3(a). As shown in Figure 3(b) each laser warning receiver includes two linear arrays 7 and 9 of sensor elements responsive to the expected laser frequency. The two linear arrays, in conjunction with an optical system shown for simplicity as a single lens 11, define two swathes of elemental areas on the sea surface, 13 and 15 for receiver 1, and 17 and 19 for receiver 3 (the remaining swathes not being shown). The receiver optics are provided with baffling 12 providing protection against direct laser illumination and also to limit the area of the scattering surface.

Each swathe comprises a large number, for example, one hundred, elemental areas in a single line, each elemental area being defined by the optical system and a corresponding sensor element of one of the arrays 7 and 9. Thus any radiation scattered from a particular elemental area of the sea surface within one of the swathes will be focussed on a corresponding one of the sensor elements and the particular elemental area can be identified by the particular sensor element activated.

With a large number of sensor elements and corresponding small extent of each elemental area the 'scatter' will not be from one elemental area exclusively. The centre point of the scatter is then obtained by comparing the energy received by eaCh sensor element against a threshold to eliminate virginal effects and then averaging the position of the remaining axtivated sensors.

From the identity of the two scatter centres, such as the pixels (elemental areas) A and B of Figure 2, the direction of the source of the laser beam can be determined easily by a processor 21 coupled to the sensor array (with intermediate pre-amplifiers and interface electronic circuitry 23).

Clearly, the direction finding accuracy improves with the number of sensor elements in the array 7, 9. An accuracy of 3° to 5° is quite practicable.

While two swathes are illustrated above for each sensor, there may be three or more, provided by a corresponding increase in linear arrays. The further swathes give 'redundant' information and correspondingly improved estimates of threat direction.

The system is particularly suited to naval operation, where the threat source is likely to be distant, the source low on the horizon and the level of scattered laser energy consequently significant.

Alternatively however, the system may be used to protect a land based installation, the local extended surface then being the surrounding ground area.

In any event, a significant advantage of the system is that the sensor array is not directed toward the potential threat but obliquely to it so as to receive only scattered and not direct energy. The sensor elements are not therefore subject to damage from high energy levels. While the system has been described for use with an existing natural feature (the sea or land surface) constituting the scattering body, in certain circumstances it may be desirable to dispose an artificial 'body' to provide the scattering effect. Thus an aerosol cloud by be disposed in a suitable position offset from the supposed enemy direction by means of rockets for very rapid disposal, or by periodic dispensing from a helicopter.

## Claims

1. A laser threat warning system characterised by sensor means (1, 2, 3 & 4) providing directional discrimination, the sensor means being directed at a local extended scattering body (13, 15, 17 & 19) so as to receive laser radiation scattered from the body and comprising an array of sensor elements (7/9) and an optical focussing system (11) defining relatively near (13, 17) and far (15, 19) swathes of elemental areas of said body extending transversely between the sensor means (1, 3) and the source of a potential threat, said sensor means (1, 2, 3 & 4) being simultaneously receptive to radiation scattered from elemental areas (B, A) of said relatively near (13, 17) and far (15, 19) swathes, the directions of said near (B) and far (A) elemental areas determined from a particular laser beam scattering providing an indication of the direction (S) of the source of the laser beam.

2. A system according to Claim 1, characterised in that there are more than two of said near (13, 17) and far (15, 19) swathes each of which is relatively nearer to or farther from the sensor means (1, 3) than each other swathe.

3. A system according to Claim 1 or Claim 2, characterised in that said array (7, 9) of sensor elements comprises a respective linear array (7, 9) for each swathe (13, 15), and each linear array (7, 9) is curved in the focal plane of the optical system (11) so that the swathes (13, 15) are of arcuate form in a horizontal plane around the sensor means (1).

4. A system according to Claim 3, characterised in that said sensor means is mounted on a ship and directed downwardly but having no view of the ship's structure.

5. A system according to Claim 4, characterised by a plurality of said sensor means (1, 2, 3 & 4), each providing a plurality of said swathes (13, 15, 17 & 19) which, together, substantially surround the ship.

6. A system according to Claim 1 or Claim 2, characterised by means for dispensing a cloud of aerosol to constitute said scattering body.

7. A system according to any preceding claim, including processor means (21) arranged to receive data from said sensor means (7/9) and determine therefrom the direction (S) of the source of the laser beam.

8. A method of determining the direction of the source of a laser threat, characterised in that sensor means (1, 2, 3 & 4) providing directional discrimination are directed at a local extended scattering body (13, 15, 17, 19), said sensor means comprising an array of sensor elements (7/9) and an optical focussing system (11) defining relatively near (13, 17) and far (15, 19) swathes of elemental areas of said body extending transversely between the sensor means (1, 3) and the source of a potential threat, the particular elements (A, B) of said swathes from which scattered radiation is received are identified, and the direction of said source is determined from the identity of the identified elements (A, B).

9. A method according to Claim 8 for determining the direction of a laser threat to a ship, wherein said sensor means (1, 2, 3 & 4) are directed to define swathes (13, 15, 17 & 19) of said elemental areas on the sea surface.

## Ansprüche

1. Laserbedrohungswarnungssystem, **gekennzeichnet durch** eine Sensoreinrichtung (1, 2, 3 & 4), die eine Richtungsunterscheidung liefert, welche Sensoreinrichtung auf einen lokalen, ausgedehnten Streukörper (13, 15, 17 & 19) gerichtet ist, um so vom Körper gestreute Laserstrahlung zu empfangen, und eine Anordnung von Sensorelementen (7/9) und ein optisches Fokussiersystem (11) umfaßt, die relativ nahe (13, 17) und ferne (15, 19) Bänder elementarer Bereiche des Körpers definieren, der sich transversal zwischen der Sonsoreinrichtung (1, 3) und der potentiellen Gefahrenquelle erstreckt, welche Sensoreinrichtung (1, 2, 3 & 4) gleichzeitig empfänglich für Strahlung ist, die von den elementaren Bereichen (B, A) der relativ nahen (13, 17) und fernen (15, 19) Bänder gestreut wird, wobei die Richtungen dieser nahen (B) und fernen (A) elementaren Bereiche aus einer besonderen Laserstrahlstreuung bestimmt werden, die eine Anzeige der Richtung (S) der Quelle des Laserstrahls liefert.

2. System nach Anspruch 1, **dadurch gekennzeichnet**, daß mehr als zwei dieser nahen (13, 17) und fernen (15, 19) Bänder vorhanden sind, von denen jedes zur Sensoreinrichtung (1, 3) relativ näher liegt oder entfernter ist als jedes andere Band.

3. System nach Anspruch 1 oder 2, **dadurch gekennzeichnet**, daß die Anordnung (7, 9) von Sensorelementen für jedes Band (13, 15) eine jeweilige lineare Anordnung (7, 9) umfaßt und daß jede lineare Anordnung (7, 9) in der Brennebene des optischen Systems (11) so gekrümmt ist, daß die Bänder (13, 15) in einer horizontalen Ebene um die Sensoreinrichtung (1) von gebogener Form sind.

4. System nach Anspruch 3, **dadurch gekennzeichnet**, daß die Sensoreinrichtung auf einem Schiff angebracht ist und nach unten gerichtet ist, jedoch keine Ansicht der Schiffsstruktur hat.

5. System nach Anspruch 4, **gekennzeichnet durch** mehrere dieser Sensoreinrichtungen (1, 2, 3, & 4), von denen jede mehrere dieser Bögen (13, 15, 17 & 19) vorsieht, die zusammen das Schiff im wesentlichen umgeben.

6. System nach Anspruch 1 oder Anspruch 2, **gekennzeichnet durch** eine Einrichtung zum Ausgeben einer Aerosolwolke zur Ausbildung des Streukörpers.

7. System nach einem der vorhergehenden Ansprüche, aufweisend eine Verarbeitungseinrichtung (21), die dazu ausgelegt ist, Daten von der Sensoreinrichtung (7/9) zu empfangen und hieraus die Richtung (S) der Quelle des Laserstrahls zu bestimmen.

8. Verfahren zum Bestimmen der Richtung der Quelle einer Laserbedrohung, **dadurch gekennzeichnet**, daß Sensoreinrichtungen (1, 2, 3 & 4), die eine Richtungsunterscheidung liefern, auf einen lokalen, ausgedehnten Streukörper (13, 15, 17, 19) gerichtet werden, daß die Sensoreinrichtung einer Anordnung von Sensorelementen (7/9) und ein optisches Fokussiersystem umfaßt, die relativ nahe (13, 17) und ferne (15, 19) Bänder elementarer Bereiche des Körpers definieren, der sich transversal zwischen der Sensoreinrichtung (1, 3) und der potentiellen Gefahrenquelle erstreckt, daß die besonderen Elemente (A, B) dieser Bänder, von denen gestreute Strahlung empfangen wird, identifiziert werden, und daß die Richtung der Quelle aus der Identität der identifizierten Elemente (A, B) bestimmt wird.

9. Verfahren nach Anspruch 8 zum Bestimmen der Richtung einer Laserbedrohung auf ein Schiff, in welchem die Sensoreinrichtung (1, 2, 3, & 4) zur Definierung von Bändern (13, 14, 15, 17 & 19) der elementaren Flächen auf die Seeoberfläche ausgerichtet ist.

## Revendications

1. Système d'avertissement de menace laser, caractérisé par un dispositif capteur (1, 2, 3 et 4) assurant une discrimination directionnelle, le dispositif capteur étant dirigé vers un corps diffusant étendu local (13, 15, 17 et 19) afin qu'il reçoive le rayonnement laser diffusé par le corps, et comprenant une matrice d'éléments capteurs (7/9) et un système de focalisation optique (11) délimitant des rangées relativement proche (13, 17) et lointaine (15, 19) de zones élémentaires du corps, disposées transversalement entre le dispositif capteur (1, 3) et la source d'une menace potentielle, le dispositif capteur (1, 2, 3 et 4) pouvant recevoir simultanément le rayonnement diffusé par les zones élémentaires (B, A) des rangées relativement proche (13, 17) et lointaine (15, 19), les directions des zones élémentaires proches (B) et lointaines (A) déterminées par diffusion d'un faisceau laser particulier donnant une indication sur la direction (S) de la source du faisceau laser.

2. Système selon la revendication 1, caractérisé en ce que plus de deux rangées proche (13, 17) et lointaine (15, 19) sont présentes, chacune étant relativement plus proche ou plus lointaine du dispositif capteur (1, 3) que chaque autre rangée.

3. Système selon la revendication 1 ou 2, caractérisé en ce que la matrice (7, 9) d'éléments capteurs comprend une matrice linéaire respective (7, 9) pour chaque rangée (13, 15), et chaque matrice linéaire (7, 9) est courbée dans le plan focal du système optique (11) afin que les rangées (13, 15) aient une forme courbe dans un plan horizontal entourant le dispositif capteur (1).

4. Système selon la revendication 3, caractérisé en ce que le dispositif capteur est monté sur un navire et est dirigé vers le bas, mais sans vision de la structure du navire.

5. Système selon la revendication 4, caractérisé par plusieurs dispositifs capteurs (1, 2, 3 et 4), formant chacun plusieurs rangées (13, 15, 17 et 19) qui entourent pratiquement le navire en coopération.

6. Système selon la revendication 1 ou 2, caractérisé par un dispositif de distribution d'un nuage d'aérosol destiné à constituer le corps diffusant.

7. Système selon l'une quelconque des revendications précédentes, comprenant un dispositif processeur (21) destiné à recevoir des données du dispositif capteur (7/9) et à déterminer à partir de celles-ci la direction (S) de la source du faisceau laser.

8. Procédé de détermination de la direction de la source d'une menace laser, caractérisé en ce qu'un dispositif capteur (1, 2, 3 et 4) assurant une discrimination directionnelle est dirigé vers un corps diffusant étendu local (13, 15, 17, 19), le dispositif capteur comprenant une matrice d'éléments capteurs (7/9) et un système de focalisation optique (11) qui délimitent des rangées relativement proche (13, 17) et lointaine (15, 19) de zones élémentaires du corps, disposées transversalement entre le dispositif capteur (1, 3) et la source d'une menace potentielle, les éléments particuliers (A, B) des rangées dont le rayonnement diffusé est reçu sont identifiés, et la direction de la source est déterminée d'après l'identité des éléments identifiés (A, B).

9. Procédé selon la revendication 8 destiné à déterminer la direction d'une menace laser dirigée sur un navire, dans lequel le dispositif capteur (1, 2, 3 et 4) est dirigé afin qu'il délimite des rangées (13, 15, 17 et 19) de zones élémentaires à la surface de la mer.

# Fig .1.

# Fig .2.

## Fig. 3a.

## Fig. 3b.